# EUROPEAN PATENT APPLICATION

(11) **EP 4 715 625 A1**
(43) Date of publication of application: **25.03.2026**
(21) Application number: 25187277.6
(22) Date of filing: 03.07.2025
(51) Int. Cl.: G06F 16/2453

(54) **DATA PROCESSING METHOD FOR DATA SERVICE SYSTEM BASED ON READ-WRITE SEPARATION ARCHITECTURE, APPARATUS, ELECTRONIC DEVICE, AND COMPUTER-READABLE STORAGE MEDIUM**

(30) Priority: 20.09.2024 CN 202411322750
(71) Applicant: Beijing Volcano Engine Technology Co., Ltd., Beijing 100190 (CN)
(72) Inventor: JIN, Derui, Beijing, 100028 (CN); LI, Ruidong, Beijing, 100028 (CN); CHEN, Heng, Beijing, 100028 (CN); SHI, Rui, Beijing, 100028 (CN)
(74) Representative: Grünecker Patent- und Rechtsanwälte PartG mbB

(57) **Abstract**

Embodiments of the present application provide a data processing method for a data service system based on a read-write separation architecture, a data processing apparatus for a data service system based on a read-write separation architecture, an electronic device, and a computer-readable storage medium, wherein the method includes: receiving a data read request sent by a client, constructing a query plan corresponding to the data read request and generating a data direct read indication; sending the query plan and the data direct read indication to a query server of the data service system, where the data direct read indication is used to indicate reading data in a write server of the data service system; and responding to the data read request according to data obtained by executing, by the query server, the query plan and the data direct read indication.

## Description

### CROSS-REFERENCE TO RELATED APPLICATION

This application claims the priority to and benefits of Chinese Patent Application No. 202411322750.0, filed on September 20, 2024. All the aforementioned patent applications are hereby incorporated by reference in their entireties.

### TECHNICAL FIELD

The present application relates to a data processing method for a data service system based on a read-write separation architecture, a data processing apparatus for a data service system based on a read-write separation architecture, an electronic device, and a computer-readable storage medium.

### BACKGROUND

In a traditional data service system based on a read-write separation architecture, data is actually written into the data service system only when the amount of data to be written reaches a threshold amount of data, or the duration from the last writing moment reaches a threshold duration. Data newly written by a user often needs to wait for a period of time before it can be read. Therefore, the traditional data service system based on the read-write separation architecture cannot meet the user's requirements for data timeliness in a high-speed read-write scenario.

### SUMMARY

The embodiments of the present application provide a data processing method for a data service system based on a read-write separation architecture, a data processing apparatus for a data service system based on a read-write separation architecture, an electronic device, a computer-readable storage medium and a computer program product.

An embodiment of the present application provides a data processing method for a data service system based on a read-write separation architecture. The method includes:
receiving a data read request sent by a client, constructing a query plan corresponding to the data read request and generating a data direct read indication, and sending the query plan and the data direct read indication to a query server of the data service system, where the data direct read indication is used to indicate reading data in a write server of the data service system; and
responding to the data read request according to data obtained by executing, by the query server, the query plan and the data direct read indication.

As an optional implementation of the embodiment of the present application, the data direct read indication is used to indicate reading data in a mutable memtable of the write server, where the mutable memtable is a memtable used to store data to be written into a storage server of the data service system in the write server; and the method further includes: reading, by the query server, target data from the mutable memtable of the write server by executing, by the query server, the data direct read indication.

As an optional implementation of the embodiment of the present application, the method further includes:
recovering the mutable memtable of the write server when the data service system is restarted due to a failure, and prohibiting providing a data read service to the client before completing recovery of the mutable memtable of the write server.

As an optional implementation of the embodiment of the present application, the data direct read indication is used to indicate reading data in an immutable memtable of the write server, where the immutable memtable is a memtable used to store data that has been written into a storage server of the data service system; and the method further includes: reading, by the query server, target data from the immutable memtable of the write server, by executing, by the query server, the data direct read indication.

As an optional implementation of the embodiment of the present application, the data direct read indication carries identification information of target metadata, and is used to indicate reading data in the immutable memtable of the write server that is written into the storage server of the data service system after data corresponding to the target metadata; the immutable memtable is a memtable used to store data that has been written into the storage server of the data service system; and the target metadata is the metadata having a latest generation time in a local metadata cache. The method further includes: reading, by the query server, the target data that is written into the storage server of the data service system after the data corresponding to the target metadata from the immutable memtable of the write server, by executing, by the query server, the data direct read indication.

As an optional implementation of the embodiment of the present application, the method further includes:
receiving, by the write server, low watermark metadata sent by a metadata server of the data service system, and deleting data corresponding to the low watermark metadata in the immutable memtable and data that is written into the storage server before the data corresponding to the low watermark metadata;
where the low watermark metadata is the metadata having a latest generation time in a set of ineffective metadata, and the set of ineffective metadata is a set consists of metadata that has been acquired by each data read server of the data service system.

As an optional implementation of the embodiment of the present application, constructing the query plan corresponding to the data read request includes:
querying a local metadata cache to obtain metadata, where the metadata cache is used to store metadata obtained by periodically polling the metadata server in the data service system; and
constructing the corresponding query plan according to the metadata and the data read request.

As an optional implementation of the embodiment of the present application, the method further includes:
receiving data to be written sent by a client;
writing the data to be written into a mutable memtable of the write server; and
after the writing is successful, sending, to the client, write success notification information.

As an optional implementation of the embodiment of the present application, the method further includes:
when the data in the mutable memtable meets a condition for writing into a storage server of the data service system, converting the mutable memtable into an immutable memtable, writing data in the immutable memtable into the storage server, and obtaining metadata corresponding to the data in the immutable memtable; and
storing the metadata corresponding to the data in the immutable memtable to a metadata server of the data service system.

An embodiment of the present application provides a data processing apparatus for a data service system based on a read-write separation architecture. The apparatus includes:
a receiving unit, configured to receive a data read request sent by a client;
a processing unit, configured to construct a query plan corresponding to the data read request and generate a data direct read indication, where the data direct read indication is used to indicate reading data in a write server of the data service system;
a sending unit, configured to send the query plan and the data direct read indication to a query server of the data service system; and
a response unit, configured to respond to the data read request according to data obtained by executing, by the query server, the query plan and the data direct read indication.

As an optional implementation of the embodiment of the present application, the data direct read indication is used to indicate reading data in the mutable memtable of the write server, and the mutable memtable is a memtable used to store data to be written into the storage server of the data service system in the write server.

The processing unit is further configured to read the target data from the mutable memtable of the write server, by executing, by the query server, the data direct read indication.

As an optional implementation of the embodiment of the present application, the processing unit is further configured to, recover the mutable memtable of the write server when the data service system is restarted due to a failure, and prohibit providing a data read service to the client before completing recovery of the mutable memtable of the write server.

As an optional implementation of the embodiment of the present application, the data direct read indication is used to indicate reading data in the immutable memtable of the write server, and the immutable memtable is a memtable used to store data that has been written into the storage server of the data service system.

The processing unit is further configured to read the target data from the immutable memtable of the write server, by executing, by the query server, the data direct read indication.

As an optional implementation of the embodiment of the present application, the data direct read indication carries identification information of target metadata, and is used to indicate reading data in the immutable memtable of the write server that is written into the storage server of the data service system after data corresponding to the target metadata; the immutable memtable is a memtable used to store data that has been written into the storage server of the data service system; and the target metadata is the metadata having a latest generation time in the local metadata cache.

The processing unit is further configured to read, by the query server, the target data that is written into the storage server of the data service system after the data corresponding to the target metadata from the immutable memtable of the write server, by executing, by the query server, the data direct read indication.

As an optional implementation of the embodiment of the present application, the processing unit is further configured to receive, by the write server, the low watermark metadata sent by the metadata server of the data service system, and delete data corresponding to the low watermark metadata in the immutable memtable and data that is written into the storage server before the data corresponding to the low watermark metadata.

The low watermark metadata is the metadata having a latest generation time in the set of ineffective metadata, and the set of ineffective metadata is a set consists of metadata that has been acquired by each of the data read servers of the data service system.

As an optional implementation of the embodiment of the present application, the processing unit is further configured to query a local metadata cache to obtain metadata, and construct the corresponding query plan according to the metadata and the data read request.

The metadata cache is used to store the metadata obtained by periodically polling the metadata server in the data service system.

As an optional implementation of the embodiment of the present application,
the receiving unit is further configured to receive data to be written sent by a client;
the processing unit is further configured to write the data to be written into the mutable memtable of the write server; and
the sending unit is further configured to, after the writing is successful, send the write success notification information to the client.

As an optional implementation of the embodiment of the present application, the processing unit is further configured to, when the data in the mutable memtable meets the condition for writing into the storage server of the data service system, convert the mutable memtable into the immutable memtable, write the data in the immutable memtable into the storage server, and obtain the metadata corresponding to the data in the immutable memtable, and store the metadata corresponding to the data in the immutable memtable to the metadata server of the data service system.

An embodiment of the present application provides an electronic device, including a memory and a processor. The memory is used to store a computer program, and the processor is used to, when executing the computer program, cause the electronic device to implement the data processing method for the data service system based on the read-write separation architecture according to any one of the preceding implementations.

An embodiment of the present application provides a computer-readable storage medium, which, when the computer program is executed by a computing device, causes the computing device to implement the data processing method for the data service system based on the read-write separation architecture according to any one of the preceding implementations.

An embodiment of the present application provides a computer program product which, when running on a computer, causes the computer to implement the data processing method for the data service system based on the read-write separation architecture according to any one of the preceding implementations.

### BRIEF DESCRIPTION OF DRAWINGS

The drawings, which are incorporated in and constitute a part of this specification, illustrate embodiments consistent with the present application and, together with the description, serve to explain the principles of the present application.

In order to more clearly illustrate the technical solutions in the embodiments of the present application or in the prior art, the drawings required in the description of the embodiments or the prior art will be briefly introduced below. Obviously, for those of ordinary skill in the art, other drawings can be obtained from these drawings without creative efforts.
FIG. 1 is a schematic diagram of a structure of a data service system according to an embodiment of the present application.
FIG. 2 is a schematic diagram of time nodes of a data writing process of a data service system according to an embodiment of the present application.
FIG. 3 is a first flowchart of steps of a data processing method for a data service system based on a read-write separation architecture according to an embodiment of the present application.
FIG. 4 is a second flowchart of steps of a data processing method for a data service system based on a read-write separation architecture according to an embodiment of the present application.
FIG. 5 is a third flowchart of steps of a data processing method for a data service system based on a read-write separation architecture according to an embodiment of the present application.
FIG. 6 is a fourth flowchart of steps of a data processing method for a data service system based on a read-write separation architecture according to an embodiment of the present application.
FIG. 7 is a schematic diagram of a structure of a data processing apparatus for a data service system based on a read-write separation architecture according to an embodiment of the present application.
FIG. 8 is a schematic diagram of a hardware structure of an electronic device according to an embodiment of the present application.

### DETAILED DESCRIPTION

In order to more clearly understand the above objectives, features, and advantages of the present application, the solutions of the present application will be further described below. It should be noted that the embodiments of the present application and features in the embodiments may be combined with each other without conflict.

Many specific details are set forth in the following description to fully understand the present application. However, the present application may also be implemented in other ways different from those described here. Obviously, the embodiments in the specification are only a part of the embodiments of the present application, but not all embodiments.

In the embodiments of the present application, words such as "exemplary" or "for example" are used to represent examples, illustrations, or explanations. Any embodiment or design scheme described as "exemplary" or "for example" in the embodiments of the present application should not be interpreted as being more preferable or advantageous than other embodiments or design schemes. Specifically, words such as "exemplary" or "for example" are used to present related concepts in a specific manner. In addition, in the description of the embodiments of the present application, "a plurality of" means two or more, unless otherwise specified.

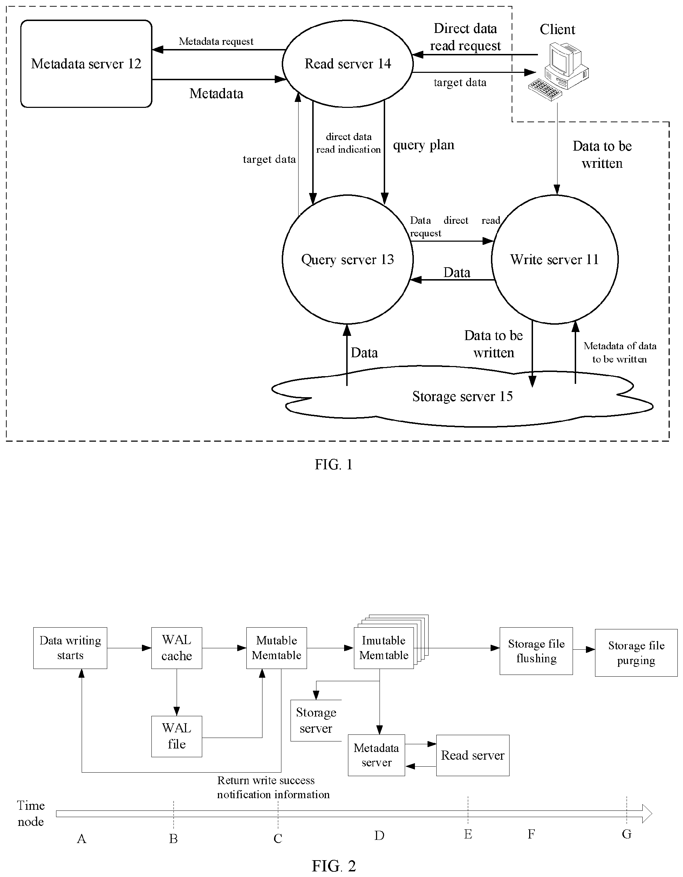

The embodiments of the present application relate to a data service system based on a read-write separation architecture. The data service system may be a distributed data system for hybrid serving and analytical processing (Hybrid Serving & Analytical processing, HSAP), or may be another read-write separation architecture system based on LSM-Tree. The data service system based on the read-write separation architecture in some embodiments will be described below. Referring to FIG. 1, the data service system based on the read-write separation architecture includes a write server 11, a metadata server 12, a query server 13, a read server 14, and a storage server 15. There may be one or more write servers 11, query servers 13, and read servers 14, to jointly perform data writing tasks and data reading tasks.

The write server 11 is responsible for real-time data writing. The internal implementation of the write server 11 is similar to a log structured merge tree (Log Structured Merge Tree, LSM Tree). Data to be written sent by a client is first written into a write-ahead log (Write Ahead Log, WAL) for persistence, and then the persistent data to be written is written into a mutable memtable. When the size of the mutable memtable reaches a threshold size, or the duration of the mutable memtable reaches a threshold duration, data in the mutable memtable is converted into a storage file in a preset format, for example, a rowset file; the mutable memtable is converted into an immutable memtable; data in the immutable memtable is written into the storage server 15; metadata corresponding to the data in the immutable memtable is obtained; and the metadata corresponding to the data in the immutable memtable is written into the metadata server 12. The write server 11 also receives a data direct read request sent by the query server 13, and sends data in the mutable memtable and/or the immutable memtable to the query server 13 in response to the data direct read request. The write server 11 also receives the low watermark metadata sent by the metadata server 12, and clears the data in the immutable memtable according to the low watermark metadata.

The metadata server 12 is responsible for metadata (Meta) information of the data service system. The metadata information includes a schema of a library table, a storage path and routing information of data, an operating state of each device of the data service system, and the like. The metadata server 12 is configured to receive the metadata sent by the write server 11 and store the metadata sent by the write server 11. The metadata server 12 is further configured to receive a polling request sent by the read server 14, and send the stored metadata to the read server 14 in response to the polling request sent by the read server 14. The metadata server 12 is further configured to obtain low watermark metadata according to the metadata currently held by each write server 11, and send the low watermark metadata to each write server 11.

The read server 14 is configured to construct a query plan corresponding to a data read request and generate a data direct read indication. The read server 14 polls the metadata stored in the metadata server 12 periodically at preset time intervals, and generates a metadata cache according to the metadata obtained from the metadata server 12. When receiving the data read request sent by the client, the read server 14 parses the data read request, constructs the corresponding query plan according to the metadata cache, and sends the data query plan to the query server 13. In addition, the read server 14 also sends the data direct read indication used to indicate reading the data in the write server 11 to the query server 13.

The query server 13 is configured to provide a data read service. The query server 13 is stateless, and executes the query plan and the data direct read indication sent by the read server 14, and obtains target data that a client wants to read according to data obtained from the storage server 15 by executing the query plan and data obtained from the write server 11 by executing the data direct read indication, and sends the target data that the client wants to read to the read server 14, and sends the data that the client wants to read to the read server 14.

Referring to FIG. 2, the data writing process of the data service system based on the read-write separation architecture and time nodes corresponding to respective steps of the process include:
Time node A: data writing starts. In some embodiments, data writing is performed by writing a Remote Procedure Call (RPC). At this time, the data writing starts, that is, the writing RPC starts.
Time node B: data to be written is written into a WAL cache.
Time node C: the data to be written is transferred from the WAL into a mutable memtable, and write success notification information is returned.
Time node D: the mutable memtable is converted into an immutable memtable, data in the immutable memtable is refreshed into a storage file, the data in the immutable memtable is written into the storage server, metadata of the data that is written into the storage server is obtained, and the metadata of the data that is written into the storage server is registered with the metadata server.
Time node E: the read server polls to read metadata having a latest written time in the metadata server. Since the read server synchronizes the metadata from the metadata server by polling, there may be a case where the metadata of some data has been written into the metadata server, but the read server has not synchronized the metadata of this part of data.
Time node F: after the data in the immutable memtable is written into the storage server, the immutable memtable will still exist for a period of time to provide the read server.
Time node G: the memory of the data write server of the data service system is limited, and the immutable memtable cannot be permanently stored. Therefore, after each read server has obtained the metadata corresponding to the data in the immutable memtable, the memory occupied by the data in the immutable memtable may be released. At this time, the query server may read, from the storage server, the data that has been released from the immutable memtable according to the corresponding metadata.

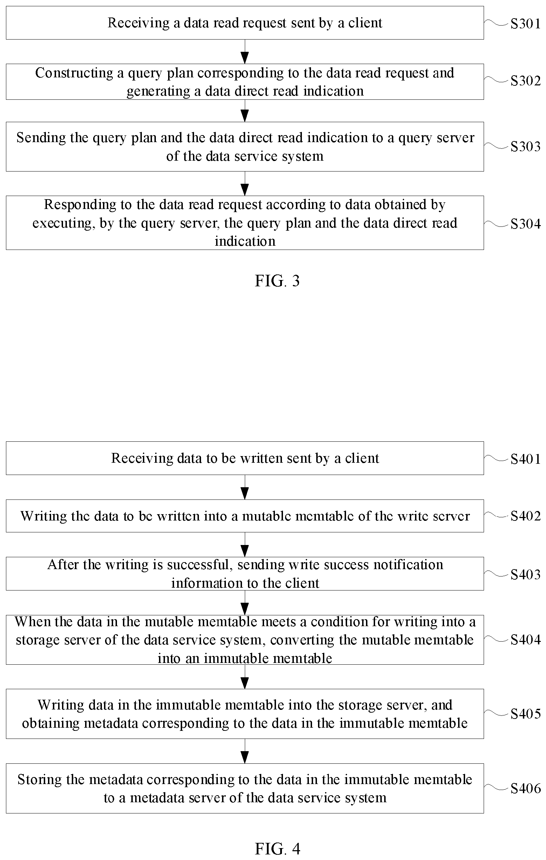

The embodiment of the present application further provides a data processing method for a data service system based on a read-write separation architecture. The execution body of the method may be the data service system based on the read-write separation architecture. Referring to FIG. 3, the data processing method for the data service system based on the read-write separation architecture includes the following steps:
S301: receiving a data read request sent by a client.

In some embodiments, identification information of data to be read may be carried in the data read request, so that the data service system determines the data to be read according to the identification information of the data.

In other embodiments, the client may carry condition information of data to be read in the data read request, so that the data service system determines the data to be read according to the condition information of the data.

S302: constructing a query plan corresponding to the data read request and generating a data direct read indication.

The data direct read indication is used to indicate reading data in a write server of the data service system.

The query plan corresponding to the data read request refers to a data reading solution generated by the data service system according to the data read request. The query plan describes a series of steps taken by the data service system to execute the data read request, and the steps may include from which tables to read data, which indexes to use, how to perform join operations, how to perform sorting, and the like.

In some embodiments, the data service system includes a plurality of write servers, and different data is written into different write servers according to an allocation algorithm. When the data service system includes a plurality of write servers, a target write server used to write data that the data read request wants to read may be determined first, and the data direct read indication carries identification information of the target write server to indicate reading data in the target write server of the data service system.

In some embodiments, the data direct read indication is used to indicate reading data in the mutable memtable of the write server, where the mutable memtable is a memtable used to store data to be written into the storage server of the data service system in the write server.

When the data direct read indication is used to indicate reading the data in the mutable memtable of the write server, the method further includes: reading, by the query server, target data from the mutable memtable of the write server, by executing, by the query server, the data direct read indication.

In the preceding embodiment, the data direct read indication is used to indicate reading the data in the mutable memtable of the write server, and the data processing method provided in the embodiment of the present application further includes reading, by the query server, the target data from the mutable memtable of the write server, by executing, by the query server, the data direct read indication. Therefore, even if the data is only written into the mutable memtable of the write server, but has not been written into the storage server of the data service system, this part of data can still be read by the client. Therefore, the preceding embodiment can improve the data timeliness of the data service system based on the read-write separation architecture.

In some embodiments, the data direct read indication is used to indicate reading data in the immutable memtable of the write server, where the immutable memtable is a memtable used to store data that has been written into the storage server of the data service system.

When the data direct read indication is used to indicate reading the data in the immutable memtable of the write server, the method further includes: reading, by the query server, the target data from the immutable memtable of the write server, by executing, by the query server, the data direct read indication.

In the preceding embodiment, the data direct read indication is used to indicate reading the data in the immutable memtable of the write server, and the data processing method provided in the embodiment of the present application further includes reading, by the query server, the target data from the immutable memtable of the write server, by executing, by the query server, the data direct read indication. Therefore, even if the metadata of the target data has not been synchronized into the metadata cache of the read server, this part of data can still be acquired by the data query server and then read by the client. Therefore, the preceding embodiment can further improve the data timeliness of the data service system based on the read-write separation architecture.

In some embodiments, the data direct read indication carries identification information of target metadata, and is used to indicate reading data in the immutable memtable of the write server that is written into the storage server of the data service system after data corresponding to the target metadata. The immutable memtable is a memtable used to store data that has been written into the storage server of the data service system, and the target metadata is the metadata having a latest generation time in the local metadata cache.

When the data direct read indication is used to indicate reading data in the immutable memtable of the write server that is written into the storage server of the data service system after data corresponding to the target metadata, the method further includes: reading, by the query server, the target data that is written into the storage server of the data service system after the data corresponding to the target metadata from the immutable memtable of the write server, by executing, by the query server, the data direct read indication.

Since the data corresponding to the target metadata and the target data that is written into the storage server before the data corresponding to the target metadata can be obtained from the storage server according to the query plan, compared with directly reading all data in the immutable memtable of the write server, in the preceding embodiment, it is only necessary to read the target data that is written into the storage server after the data corresponding to the target metadata from the immutable memtable of the write server. Therefore, in the embodiment of the present application, it is possible to reduce the data read from the write server while ensuring all the target data to be read, thereby reducing data transmission overhead between the query server and the data write server of the data service system.

In some embodiments, the data direct read indication is used to indicate reading data in the mutable memtable and data in the immutable memtable of the write server. The mutable memtable is a memtable used to store data to be written into the storage server of the data service system in the write server. The immutable memtable is a memtable used to store data that has been written into the storage server of the data service system.

When the data direct read indication is used to indicate reading data in the mutable memtable and data in the immutable memtable of the write server, the method further includes: reading, by the query server, the target data from the mutable memtable and the immutable memtable of the write server, by executing, by the query server, the data direct read indication.

Based on the technical effects that can be brought about by reading the target data from the mutable memtable and the immutable memtable of the write server respectively, reading the target data from the mutable memtable and the immutable memtable of the write server can not only allow the data that is only written into the mutable memtable of the write server but has not been written into the storage server of the data service system to be read by the client, but also allow the data whose corresponding metadata has not been synchronized to the read server to be read by the client. Therefore, the preceding embodiment can improve the data timeliness of the data service system based on the read-write separation architecture more comprehensively.

S303: sending the query plan and the data direct read indication to a query server of the data service system.

Correspondingly, the query server of the data service system receives the query plan and the data direct read indication.

S304: responding to the data read request according to data obtained by executing, by the query server, the query plan and the data direct read indication.

In some embodiments, the query server executes the data direct read indication, including: the query server sends a data direct read request to the write server in response to the data direct read indication, and receives data requested by the data direct read request sent by the write server.

The data processing method for the data service system based on the read-write separation architecture provided in the embodiment of the present application includes: when receiving a data read request sent by a client, constructing a query plan corresponding to the data read request, and generating a data direct read indication used to indicate reading data in a write server of the data service system; and then responding to the data read request according to data obtained by a query server by executing the query plan and the data direct read indication. In the data processing method for the data service system based on the read-write separation architecture provided in the embodiment of the present application, when the data read request sent by the client is received, the data direct read indication is generated, and the data read request is responded to according to the data obtained by executing the data direct read indication. The data direct read indication is used to indicate reading the data in the write server of the data service system. Therefore, as long as the data is written into the write server of the data service system, it can be read by the client, without waiting for the data to be written into the data storage server of the data service system before it can be read by the client. Therefore, in the embodiment of the present application, the write server is used as the information source, and the data read request is responded to based on the data status of the write server, thereby improving the data timeliness of the data service system based on the read-write separation architecture.

The embodiment of the present application further provides a data processing method for a data service system based on a read-write separation architecture. The data processing method is used to write data into the data service system. Referring to FIG. 4, the data processing method for the data service system based on the read-write separation architecture includes the following steps:
S401: receiving data to be written sent by a client.
S402: writing the data to be written into a mutable memtable of the write server.

In some embodiments, writing the data to be written into the mutable memtable of the write server includes: first writing the data to be written into a write-ahead log (Write-Ahead Logging, WAL) of the write server, and then transferring the data in the write-ahead log into the mutable memtable of the write server.

S403: after the writing is successful, sending write success notification information to the client.

Compared with the related art, after data is persisted into a write-ahead log, the write server sends confirmation information used to indicate that the writing of the data has been completed to the client. However, the data is written into the mutable memtable from the write-ahead log asynchronously. In the preceding embodiment, the write success notification information is sent to the client after the data to be written is successfully written into the mutable memtable. The data direct read indication is used to indicate reading data in the mutable memtable of the write server. Therefore, the preceding embodiment can provide a guarantee that data can be read immediately after it is written.

S404: when the data in the mutable memtable meets a condition for writing into a storage server of the data service system, converting the mutable memtable into an immutable memtable.

In some embodiments, the condition that the data in the mutable memtable meets for writing into the storage server of the data service system is that the amount of data in the mutable memtable reaches a threshold amount of data.

In other embodiments, the condition that the data in the mutable memtable meets for writing into the storage server of the data service system is that the duration of the mutable memtable reaches a threshold duration.

S405: writing data in the immutable memtable into the storage server, and obtaining metadata corresponding to the data in the immutable memtable.

In some embodiments, writing the data in the immutable memtable into the storage server and obtaining the metadata corresponding to the data in the immutable memtable include: the write server sends the data in the immutable memtable to a storage server, and the storage server stores the data sent by the write server and returns metadata of the stored data.

S406: storing the metadata corresponding to the data in the immutable memtable to a metadata server of the data service system.

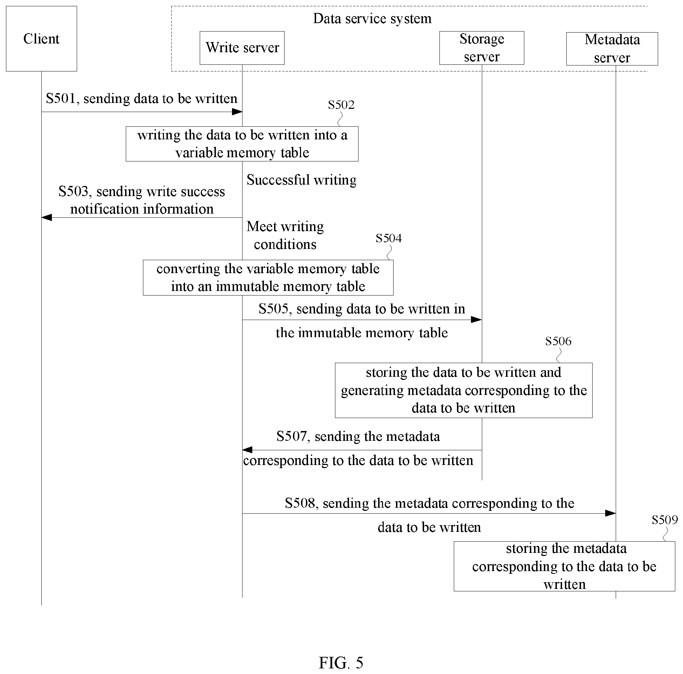

The embodiment of the present application further provides a data processing method for a data service system based on a read-write separation architecture. The data processing method is used to write data into the data service system. Referring to FIG. 5, the data processing method for the data service system based on the read-write separation architecture includes the following steps:
S501: a client sends data to be written to a write server of the data service system.

Correspondingly, the write server of the data service system receives the data to be written sent by the client.

S502: the write server of the data service system writes the data to be written into a mutable memtable.

S503: after the writing of the data to be written into the mutable memtable is successful, the write server of the data service system sends write success notification information to the client.

Correspondingly, the client receives the write success notification information sent by the write server of the data service system.

S504: when the data in the mutable memtable meets a condition for writing into a storage server of the data service system, the write server of the data service system converts the mutable memtable into an immutable memtable.

S505: the write server of the data service system sends the data to be written in the immutable memtable to the storage server of the data service system.

Correspondingly, the storage server of the data service system receives the data to be written sent by the write server of the data service system.

S506: the storage server of the data service system stores the data to be written and generates the metadata corresponding to the data to be written.

S507: the storage server of the data service system sends the metadata corresponding to the data to be written to the write server of the data service system.

Correspondingly, the write server of the data service system receives the metadata corresponding to the data to be written sent by the storage server of the data service system.

S508: the write server of the data service system sends the metadata corresponding to the data to be written to the metadata server of the data service system.

Correspondingly, the metadata server of the data service system receives the metadata corresponding to the data to be written sent by the write server of the data service system.

S509: the metadata server of the data service system stores the metadata corresponding to the data to be written.

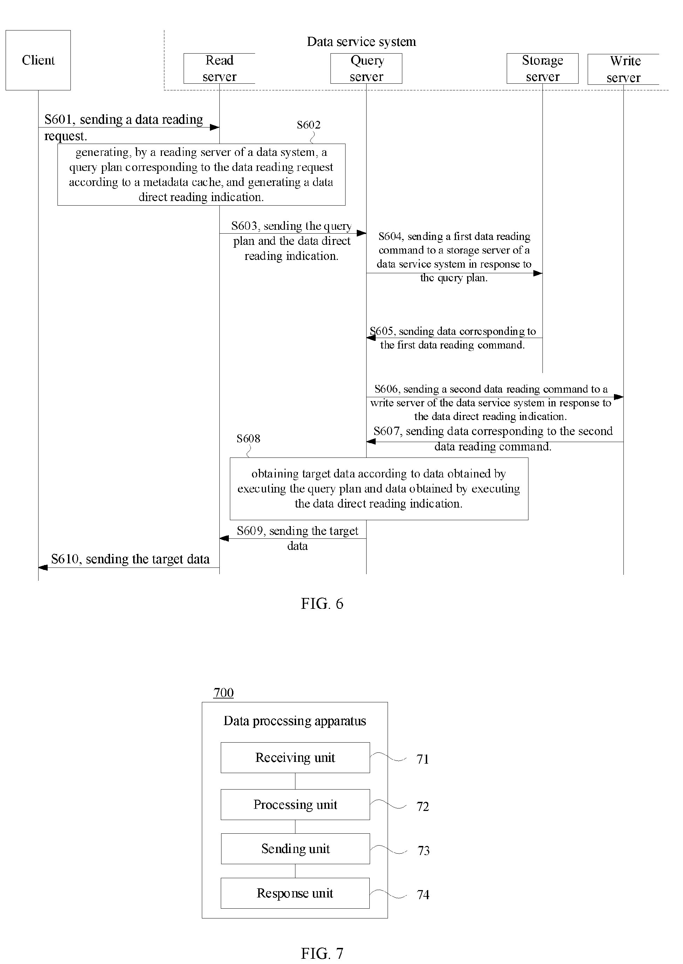

The embodiment of the present application further provides a data processing method for a data service system based on a read-write separation architecture. The data processing method is used to read data from the data service system. Referring to FIG. 6, the data processing method for the data service system based on the read-write separation architecture includes the following steps:

S601: a client sends a data read request to a read server of the data service system.

Correspondingly, the read server of the data service system receives the data read request sent by the client.

S602: the read server of the data service system generates a query plan corresponding to the data read request according to a metadata cache, and generates a data direct read indication.

The data direct read indication is used to indicate reading data in a write server of the data service system.

In some embodiments, the read server polls to obtain the metadata stored in the metadata server periodically at preset time intervals, and generates the metadata cache according to the metadata obtained from the metadata server. Therefore, the metadata cache of the read server is a metadata cache generated according to the latest metadata obtained from the metadata server.

S603: the read server of the data service system sends the query plan and the data direct read indication to a query server of the data service system.

Correspondingly, the query server of the data service system receives the query plan and the data direct read indication sent by the read server of the data service system.

S604: the query server of the data service system sends a first data read command to the storage server of the data service system in response to the query plan.

Correspondingly, the storage server of the data service system receives the first data read command sent by the query server of the data service system.

S605: the storage server of the data service system sends data corresponding to the first data read command to the query server of the data service system.

Correspondingly, the query server of the data service system receives the data corresponding to the first data read command sent by the storage server of the data service system.

S606: the query server of the data service system sends a second data read command to the write server of the data service system in response to the data direct read indication.

Correspondingly, the write server of the data service system receives the second data read command sent by the query server of the data service system.

S607: the write server of the data service system sends data corresponding to the second data read command to the query server of the data service system.

Correspondingly, the query server of the data service system receives the data corresponding to the second data read command sent by the write server of the data service system.

S608: the query server of the data service system obtains the target data according to the data obtained by executing the query plan and the data obtained by executing the data direct read indication.

The target data is data that the data read request wants to read.

S609: the query server of the data service system sends the target data to the read server of the data service system.

Correspondingly, the read server of the data service system receives the target data sent by the query server of the data service system.

S610: the read server of the data service system sends the target data to the client.

Correspondingly, the client receives the target data sent by the read server of the data service system.

In some embodiments, the data processing method provided in the embodiment of the present application further includes:
receiving, by the write server, the low watermark metadata sent by the metadata server of the data service system, and deleting the data corresponding to the low watermark metadata in the immutable memtable and data that is written into the storage server before the data corresponding to the low watermark metadata;
where the low watermark metadata is the metadata having a latest generation time in the set of ineffective metadata, and the set of ineffective metadata is a set consisting of metadata that has been acquired by each data read server of the data service system.

Although the read server polls to obtain the metadata stored in the metadata server periodically at preset time intervals, the metadata stored in the metadata server is only the metadata of the data that has been submitted by the data write server. In terms of data freshness, read server > metadata server > front end. Therefore, after the read server synchronizes the metadata from the metadata server, the version number of the data corresponding to the synchronized metadata may be reported to the metadata server through a heartbeat packet, so that the metadata server has a global view at this time, and takes the metadata with the lowest version in all the read servers as the low watermark metadata, and sends it to the read server. After the read server obtains the low watermark metadata from the metadata server, data lower than the low watermark metadata may be directly eliminated to release the memory.

In some embodiments, the metadata server of the data service system may obtain the metadata that has been acquired by the respective data read servers of the data service system, and determine the low watermark metadata according to the metadata that has been acquired by the respective data read servers of the data service system.

Exemplarily, the preceding embodiment will be described below by using an example in which the data service system based on the read-write separation architecture includes three read servers (read server 1, read server 2, and read server 3), and the metadata caches of the three read servers are as follows:
the read server 1: metadata [1, 2];
the read server 2: metadata [1, 2, 3];
the read server 3: metadata [1, 2, 3, 4];
metadata stored in the metadata server: metadata [1, 2, 3, 4, 5, 6]; and

The storage files stored in the immutable memtable of the write server are: storage files [1, 2, 3, 4, 5, 6, 7], and the above embodiment will be described as an example.

When the metadata server determines the metadata in the metadata caches of the data read server 1, the data read server 2, and the data read server 3, it can determine that the metadata of the storage file 1 and the storage file 2 has been synchronized into the metadata caches of all the write servers of the data service system based on the read-write separation architecture. Therefore, it can be determined that the low watermark metadata is the metadata 2. After the metadata 2 is sent to the write server, the write server may delete the storage file 1 and the storage file 2 in the immutable memtable. After the deletion, the storage files stored in the immutable memtable of the write server are: storage files [3, 4, 5, 6, 7].

In the preceding embodiment, if the storage file 3 stored in the immutable memtable of the write server is also deleted, the storage files stored in the immutable memtable of the write server after the deletion are: storage files [4, 5, 6, 7]. At this time, if the client reads data through the read server 1, the storage file 1 and the storage file 2 may be obtained by accessing the storage server based on the metadata cache of the read server 1; the storage files 4, 5, 6, and 7 may be obtained by accessing the storage files stored in the immutable memtable of the write server, but the storage file 3 cannot be obtained from anywhere, and a data rollback problem occurs.

In some embodiments, the data processing method for the data service system based on the read-write separation architecture provided in the embodiment of the present application further includes: recovering the mutable memtable of the write server when the data service system is restarted due to a failure, and prohibiting providing a data read service to the client before completing recovery of the mutable memtable of the write server.

After the write server is restarted due to a failure, in the process of initializing the mutable memtable, the mutable memtable needs to be generated according to the data that has not been consumed in the WAL. If data is read during this period, it may be impossible to ensure that the data stored in the mutable memtable is read normally because the data in the mutable memtable cannot be obtained. Therefore, the data read service may be prohibited from being provided to the client during this period until the recovery of the mutable memtable of the write server is completed.

In some embodiments, the data processing method for the data service system based on the read-write separation architecture provided in the embodiment of the present application further includes: recovering the immutable memtable of the write server according to the low watermark metadata when the data service system is restarted due to a failure, and prohibiting providing a data read service to the client before completing recovery of the immutable memtable of the write server.

In some embodiments, recovering the immutable memtable of the write server according to the low watermark metadata includes: obtaining, from the storage server, data written after the data corresponding to the low watermark metadata, and recovering the immutable memtable according to the data written after the data corresponding to the low watermark metadata.

Based on the same inventive concept, as an implementation of the preceding method, an embodiment of the present application further provides a data processing apparatus for a data service system based on a read-write separation architecture. The embodiment corresponds to the preceding method embodiments. For ease of reading, details in the preceding method embodiments will not be repeated in this embodiment. However, it should be clear that the data processing apparatus in this embodiment can correspondingly implement all the content in the preceding method embodiments.

An embodiment of the present application provides a data processing apparatus for a data service system based on a read-write separation architecture. FIG. 7 is a schematic diagram of a structure of the data processing apparatus. As shown in FIG. 7, the data processing apparatus 700 includes:
a receiving unit 71, configured to receive a data read request sent by a client;
a processing unit 72, configured to construct a query plan corresponding to the data read request and generate a data direct read indication, where the data direct read indication is used to indicate reading data in a write server of the data service system;
a sending unit 73, configured to send the query plan and the data direct read indication to a query server of the data service system; and
a response unit 74, configured to respond to the data read request according to data obtained by executing, by the query server, the query plan and the data direct read indication.

As an optional implementation of the embodiment of the present application, the data direct read indication is used to indicate reading data in a mutable memtable of the write server, where the mutable memtable is a memtable used to store data to be written into a storage server of the data service system in the write server.

The processing unit 72 is further configured to read target data from the mutable memtable of the write server, by executing, by the query server, the data direct read indication.

As an optional implementation of the embodiment of the present application, the processing unit 72 is further configured to, recover the mutable memtable of the write server when the data service system is restarted due to a failure, and prohibit providing a data read service to the client before completing recovery of the mutable memtable of the write server.

As an optional implementation of the embodiment of the present application, the data direct read indication is used to indicate reading data in an immutable memtable of the write server, where the immutable memtable is a memtable used to store data that has been written into a storage server of the data service system.

The processing unit 72 is further configured to read target data from the immutable memtable of the write server, by executing, by the query server, the data direct read indication.

As an optional implementation of the embodiment of the present application, the data direct read indication carries identification information of target metadata, and is used to indicate reading data in the immutable memtable of the write server that is written into the storage server of the data service system after data corresponding to the target metadata. The immutable memtable is a memtable used to store data that has been written into the storage server of the data service system. The target metadata is the metadata having a latest generation time in a local metadata cache.

The processing unit 72 is further configured to read, by the query server, the target data that is written into the storage server of the data service system after the data corresponding to the target metadata from the immutable memtable of the write server by executing the data direct read indication.

As an optional implementation of the embodiment of the present application, the processing unit 72 is further configured to receive, by the write server, low watermark metadata sent by a metadata server of the data service system, and delete data corresponding to the low watermark metadata in the immutable memtable and data that is written into the storage server before the data corresponding to the low watermark metadata.

The low watermark metadata is the metadata having a latest generation time in a set of ineffective metadata, and the set of ineffective metadata is a set consists of metadata that has been acquired by each data read server of the data service system.

As an optional implementation of the embodiment of the present application, the processing unit 72 is further configured to query a local metadata cache to obtain metadata, and construct the corresponding query plan according to the metadata and the data read request.

The metadata cache is used to store the metadata obtained by periodically polling the metadata server in the data service system.

As an optional implementation of the embodiment of the present application,
the receiving unit 71 is further configured to receive data to be written sent by a client;
the processing unit 72 is further configured to write the data to be written into the mutable memtable of the write server; and
the sending unit 73 is further configured to, after the writing is successful, send the write success notification information to the client.

As an optional implementation of the embodiment of the present application, the processing unit 72 is further configured to, when the data in the mutable memtable meets the condition for writing into the storage server of the data service system, convert the mutable memtable into the immutable memtable, write the data in the immutable memtable into the storage server, and obtain the metadata corresponding to the data in the immutable memtable, and store the metadata corresponding to the data in the immutable memtable to the metadata server of the data service system.

The data processing apparatus for the data service system based on the read-write separation architecture provided in the embodiment of the present application can execute the data processing method for the data service system based on the read-write separation architecture according to any one of the preceding embodiments, and the implementation principles and technical effects thereof are similar, which will not be repeated here.

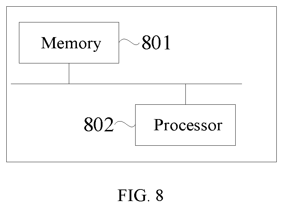

Based on the same inventive concept, an embodiment of the present application further provides an electronic device. FIG. 8 is a schematic diagram of a structure of an electronic device according to an embodiment of the present application. As shown in FIG. 8, the electronic device provided in this embodiment includes a memory 801 and a processor 802. The memory 801 is configured to store a computer program, and the processor 802 is configured to, when executing the computer program, execute the data processing method for the data service system based on the read-write separation architecture according to any one of the preceding embodiments.

Based on the same inventive concept, an embodiment of the present application further provides a computer-readable storage medium. The computer-readable storage medium stores a computer program, and when the computer program is executed by a processor, the computing device is caused to implement the data processing method for the data service system based on the read-write separation architecture according to any one of the preceding embodiments.

Based on the same inventive concept, an embodiment of the present application further provides a computer program product. When the computer program product runs on a computer, the computing device is caused to implement the data processing method for the data service system based on the read-write separation architecture according to any one of the preceding embodiments.

Those skilled in the art should understand that the embodiments of the present application may be provided as a method, a system, or a computer program product. Therefore, the present application may take the form of a complete hardware embodiment, a complete software embodiment, or a combination of software and hardware aspects. Moreover, the present application may take the form of a computer program product implemented on one or more computer-usable storage media including computer-usable program codes.

The processor may be a central processing unit (Central Processing Unit, CPU), or may be another general-purpose processor, a digital signal processor (Digital Signal Processor, DSP), an application specific integrated circuit (Application Specific Integrated Circuit, ASIC), a field-programmable gate array (Field-Programmable Gate Array, FPGA) or other programmable logic devices, discrete gate or transistor logic devices, discrete hardware components, and the like. The general-purpose processor may be a microprocessor or the processor may also be any conventional processor or the like.

The memory may include non-permanent memory, random access memory (RAM) and/or nonvolatile memory in a computer-readable medium, such as read-only memory (ROM) or flash memory (flash RAM). The memory is an example of a computer-readable medium.

The computer-readable medium includes permanent and non-permanent, removable and non-removable storage media. The storage medium may be implemented by any method or technology for storing information, and the information may be computer-readable instructions, data structures, program modules or other data. Examples of storage media of the computer include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cassette, magnetic disk storage or other magnetic storage devices or any other non-transmission medium, which can be used to store information accessible by a computing device. According to the definition herein, the computer-readable medium does not include transitory media, such as a modulated data signal and a carrier.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions described in the foregoing embodiments, or equivalently replace some or all of the technical features. These modifications or replacements do not make the essence of the corresponding technical solutions deviate from the scope of the technical solutions of the embodiments of the present application.

## Claims

1. A data processing method for a data service system based on a read-write separation architecture, comprising:
receiving (S301) a data read request sent by a client;
constructing (S302) a query plan corresponding to the data read request and generating a data direct read indication;
sending (S303) the query plan and the data direct read indication to a query server of the data service system, wherein the data direct read indication is used to indicate reading data in a write server of the data service system; and
responding (S304) to the data read request according to data obtained by executing, by the query server, the query plan and the data direct read indication.

2. The data processing method according to claim 1, wherein the data direct read indication is used to indicate reading data in a mutable memtable of the write server, and the mutable memtable is a memtable used to store data to be written into a storage server of the data service system in the write server; and
the data processing method further comprises:
reading target data from the mutable memtable of the write server, by executing, by the query server the data direct read indication.

3. The data processing method according to claim 2, further comprising:
recovering the mutable memtable of the write server when the data service system is restarted due to a failure, and prohibiting providing a data read service to the client before completing recovery of the mutable memtable of the write server.

4. The data processing method according to claim **1,** wherein the data direct read indication is used to indicate reading data in an immutable memtable of the write server, and the immutable memtable is a memtable used to store data that has been written into the storage server of the data service system; and
the data processing method further comprises:
reading target data from the immutable memtable of the write server, by executing, by the query server the data direct read indication.

5. The data processing method according to claim 1, wherein the data direct read indication carries identification information of target metadata, and the data direct read indication is used to indicate reading data in an immutable memtable of the write server that is written into a storage server of the data service system after data corresponding to the target metadata; the immutable memtable is a memtable used to store data that has been written into the storage server of the data service system; and the target metadata is metadata having a latest generation time in a local metadata cache; and
the data processing method further comprises:
reading the target data that is written into the storage server of the data service system after the data corresponding to the target metadata from the immutable memtable of the write server, by executing, by the query server, the data direct read indication.

6. The data processing method according to claim 4, further comprising:
receiving, through the write server, low watermark metadata sent by a metadata server of the data service system, and deleting data corresponding to the low watermark metadata in the immutable memtable and data that is written into the storage server before the data corresponding to the low watermark metadata,
wherein the low watermark metadata is metadata having a latest generation time in a set of ineffective metadata, and the set of ineffective metadata is a set consists of metadata that has been acquired by each data read server of the data service system.

7. The data processing method according to claim 5, further comprising:
receiving, through the write server, low watermark metadata sent by a metadata server of the data service system, and deleting data corresponding to the low watermark metadata in the immutable memtable and data that is written into the storage server before the data corresponding to the low watermark metadata,
wherein the low watermark metadata is metadata having a latest generation time in a set of ineffective metadata, and the set of ineffective metadata is a set consists of metadata that has been acquired by each data read server of the data service system.

8. The data processing method according to claim 1, wherein the constructing a query plan corresponding to the data read request comprises:
querying a metadata cache in local to obtain metadata, wherein the metadata cache is used to store metadata obtained by periodically polling a metadata server in the data service system; and
constructing a corresponding query plan according to the metadata and the data read request.

9. The data processing method according to claim 2, further comprising:
receiving data to be written sent by the client;
writing the data to be written into the mutable memtable of the write server; and
after the writing is successful, sending write success notification information to the client.

10. The data processing method according to claim 9, further comprising:
when the data in the mutable memtable meets a condition for writing into the storage server of the data service system, converting the mutable memtable into an immutable memtable, writing data in the immutable memtable into the storage server, and obtaining metadata corresponding to the data in the immutable memtable; and
storing the metadata corresponding to the data in the immutable memtable to a metadata server of the data service system.

11. A data processing apparatus for a data service system based on a read-write separation architecture, comprising:
a receiving unit (71), configured to receive a data read request sent by a client;
a processing unit (72), configured to construct a query plan corresponding to the data read request and generate a data direct read indication, wherein the data direct read indication is used to indicate reading data in a write server of the data service system;
a sending unit (73), configured to send the query plan and the data direct read indication to a query server of the data service system; and
a response unit (74), configured to respond to the data read request according to data obtained by executing, by the query server, the query plan and the data direct read indication.

12. An electronic device, comprising a memory (801) and a processor (802), wherein the memory is configured to store a computer program, and the processor is configured to, when executing the computer program, cause the electronic device to implement the data processing method for a data service system based on a read-write separation architecture according to any one of claims 1 to 10.

13. A non-transitory computer-readable storage medium, wherein the computer-readable storage medium stores a computer program, and when the computer program is executed by a computing device, the computing device is caused to implement the data processing method for a data service system based on a read-write separation architecture according to any one of claims 1 to 10.

14. A computer program product, when the computer program product is run on a computer, causes the computer to implement the data processing method for the data service system based on the read-write separation architecture according to any one of claims 1 to 10.
